# EUROPEAN PATENT SPECIFICATION

(11) **EP 3 621 402 B1**
(45) Date of publication and mention of the grant of the patent: **06.08.2025**
(21) Application number: 17908326.6
(22) Date of filing: 02.05.2017
(51) Int. Cl.: H04W 74/08, H04W 72/12

(54) **TERMINAL, RADIO COMMUNICATION METHOD, AND SYSTEM**
DRAHTLOSKOMMUNIKATIONSVERFAHREN, UND SYSTEM
PROCÉDÉ DE COMMUNICATION SANS FIL, ET SYSTÈME

(43) Date of publication of application: 11.03.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2017/017300
(87) International publication number: WO 2018/203401

(56) References cited:
- JP-A- 2016 506 199
- ZTE ET AL: "Basic Grant-free Transmission for URLLC", vol. RAN WG1, no. Athens Greece; 20170213 - 20170217, 7 February 2017 (2017-02-07), XP051220813, Retrieved from the Internet <URL:http://www.3gpp.org/ftp/tsg_ran/WG1_RL1/TSGR1_88/Docs/> [retrieved on 20170207]
- LG ELECTRONICS INC: "Remaining issues on SPS Confirmation MAC CE", vol. RAN WG2, no. Gothenburg, Sweden; 20160822 - 20160826, 21 August 2016 (2016-08-21), XP051141016, Retrieved from the Internet <URL:http://www.3gpp.org/ftp/Meetings_3GPP_SYNC/RAN2/Docs/> [retrieved on 20160821]
- ZTE: "Discussion on SPS related issues", vol. RAN WG2, no. Kaohsiung; 20161010 - 20161014, 30 September 2016 (2016-09-30), XP051161798, Retrieved from the Internet <URL:http://www.3gpp.org/ftp/tsg_ran/WG2_RL2/TSGR2_95bis/Docs/> [retrieved on 20160930]
- SAMSUNG: "Support of multiple SL/UL SPS configurations", vol. RAN WG1, no. Reno, USA; 20161114 - 20161118, 13 November 2016 (2016-11-13), XP051176337, Retrieved from the Internet <URL:http://www.3gpp.org/ftp/Meetings_3GPP_SYNC/RAN1/Docs/> [retrieved on 20161113]
- HUAWEI ET AL: "DCI for NB-IoT", vol. RAN WG1, no. Budapest, HU; 20160118 - 20160120, 17 January 2016 (2016-01-17), XP051053355, Retrieved from the Internet <URL:http://www.3gpp.org/ftp/Meetings_3GPP_SYNC/RAN1/Docs/> [retrieved on 20160117]
- ZTE: "ZTE Microelectronics, Basic Grant-free Transmission for URLLC", 3GPP TSG-RAN WG1#88 R1-1701594, 7 February 2017 (2017-02-07), XP051220813, Retrieved from the Internet <URL:http://www.3gpp.org/ftp/tsg_ran/WG1_RL1/TSGR1_88/Docs/R1-1701594.zip> [retrieved on 20170605]
- CATT: "UL grant-free transmission for URLLC", 3GPP TSG-RAN WG1#88 R1-1702105, 7 February 2017 (2017-02-07), XP051221019, Retrieved from the Internet <URL:http://www.3gpp.org/ftp/tsg-ran/WG1_RL1/TSGR1_88/Docs/R1-1702105.zip> [retrieved on 20170605]
- ZTE: "Discussion on SPS related issues", 3GPP TSG-RAN WG2#95BIS R2-166616, 30 September 2016 (2016-09-30), XP051161798, Retrieved from the Internet <URL:http://www.3gpp.org/ftp/tsg_ran/WG2_RL2/TSGR2_95bis/Docs/R2-166616.zip> [retrieved on 20170605]

## Description

### Technical Field

The present invention relates to a terminal, a radio communication method, and a system.

### Background Art

In the UMTS (Universal Mobile Telecommunications System) network, the specifications of long term evolution (LTE) have been drafted for the purpose of further increasing high speed data rates, providing lower latency and so on (see non-patent literature 1). In addition, LTE-A (LTE advanced and LTE Rel. 10, 11, 12 and 13) has been standardized for the purpose of achieving increased capacity and enhancement beyond LTE (LTE Rel. 8 and 9).

Successor systems of LTE are also under study (for example, referred to as "FRA (Future Radio Access)," "5G (5th generation mobile communication system)," "5G+ (plus)," "NR (New Radio)," "NX (New radio access)," "FX (Future generation radio access)," "LTE Rel. 14 or 15 and later versions," etc.).

In existing LTE systems (for example, LTE Rel. 8 to 13), downlink (DL) and/or uplink (UL) communication are carried out by using 1-ms subframes (also referred to as "transmission time intervals (TTIs)" and so on). These subframes are the time unit for transmitting one channel-encoded data packet, and serve as the unit of processing in, for example, scheduling, link adaptation, retransmission control (HARQ (Hybrid Automatic Repeat reQuest)) and so on.

Furthermore, a radio base station (for example, an eNB (eNode B)) controls the allocation (scheduling) of data to user terminals (UE (User Equipment)), and reports data scheduling indications to the UEs by using downlink control information (DCI). For example, when a UE conforming to existing LTE (for example, LTE Rel. 8 to 13) receives DCI that indicates UL transmission (also referred to as a "UL grant"), the UE transmits UL data in a subframe that is located a certain period later (for example, 4 ms later).

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010
"Basic Grant-free Transmission for URLLC" (by ZTE and ZTE Microelectronics; 3GPP DRAFT R1-1701594) describes different design aspects of grant-free transmission for URLLC and the authors observations and proposals.
"Remaining issues on SPS Confirmation MAC CE" (by LG Electronics Inc.; 3GPP DRAFT R2-165663) describes the authors' proposals and observations on the SPS Confirmation MAC CE, based on an agreement from the meeting RAN2 #95.
"Discussion on SPS related issues" (by ZTE; 3GPP DRAFT R2-166616) describes the viewpoint of SPS related issues that are said to have no consensus and the authors' proposals.
"Support of multiple SL/UL SPS configurations" (by SAMSUNG; 3GPP DRAFT R1-1612389) describes agreements from RAN1#87 meeting for support of SL and UL multiple SPS configurations.

### Summary of Invention

### Technical Problem

In future radio communication systems (for example, NR), it is likely that data scheduling will be controlled differently than in existing LTE systems. For example, in order to provide communication services that require low latency and high reliability (for example, URLLC (Ultra Reliable and Low Latency Communications)), research is underway to reduce communication latency (latency reduction).

To be more specific, in order to reduce the latency time before UL data transmission is started, studies are in progress to perform communication by permitting contention in UL transmission among multiple UEs. For example, studies are in progress to allow UEs to transmit UL data without UL grants from radio base stations (also referred to as "UL grant-free transmission," "UL grant-less transmission," "contention-based UL transmission," etc.).

Research is underway to configure/re-configure, semi-statically, resource fields for allocating UL data that is transmitted in UL-grant free transmission. However, there is a problem, when UL grant-free transmission is run based completely on semi-static configurations, that flexible control is not possible. In this case, there may be a decline in communication throughput, spectral efficiency, and so forth.

It is therefore an object of the present invention to provide a user terminal and a radio communication method, whereby, even when UL grant-free transmission is performed, the decline in communication throughput and the like can be reduced.

### Solution to Problem

According to one aspect of the present invention, there is provided a terminal as set out in Claim 1.

According to another aspect of the present invention, there is provided a radio communication method as set out in Claim 5.

According to another aspect of the present invention, there is provided a system as set out in Claim 6.

Portions of the description related to the base station - apparatus and method therein - taken in isolation do not fall under the scope of the claims and are retained as examples useful for understanding the invention.

### Advantageous Effects of Invention

According to the present invention, even when UL grant-free transmission is performed, it is possible to reduce the decline in communication throughput and so forth.

### Brief Description of Drawings

FIG. 1A is a diagram to explain UL grant-based transmission, and FIG. 1B is a diagram to explain UL grant-free transmission;
FIG. 2 is a diagram to show examples of resources for use in UL grant-free transmission;
FIG. 3 is a diagram to show an example of UL grant-free transmission parameter control according to one embodiment of the present invention;
FIG. 4 is a diagram to show another example of UL grant-free transmission parameter control according to one embodiment of the present invention;
FIG. 5 is a diagram to explain yet another example of controlling UL grant-free transmission parameters according to one embodiment of the present invention;
FIG. 6 is a diagram to show an exemplary schematic structure of a radio communication system according to one embodiment of the present invention;
FIG. 7 is a diagram to show an exemplary overall structure of a radio base station according to one embodiment of the present invention;
FIG. 8 is a diagram to show an exemplary functional structure of a radio base station according to one embodiment of the present invention;
FIG. 9 is a diagram to show an exemplary overall structure of a user terminal according to one embodiment of the present invention;
FIG. 10 is a diagram to show an exemplary functional structure of a user terminal according to one embodiment of the present invention; and
FIG. 11 is a diagram to show an exemplary hardware structure of a radio base station and a user terminal according to one embodiment of the present invention.

### Description of Embodiments

Described herein is a user terminal that has a transmission section that performs UL grant-free transmission, in which UL data is transmitted without a UL transmission indication from the radio base station, and a control section that controls the UL grant-free transmission based on a configuration of the UL grant-free transmission, which is determined based on physical layer signaling.

Envisaging future radio communication systems (including, for example, LTE Rel. 14, 15 and later versions, 5G, NR, etc., and hereinafter collectively referred to as "NR"), UL grant-based transmission, in which UL data is transmitted based on UL grants, is not enough by itself to enable communication with low latency, and it is necessary to employ UL grant-free transmission, in which UL data is transmitted without UL grants.

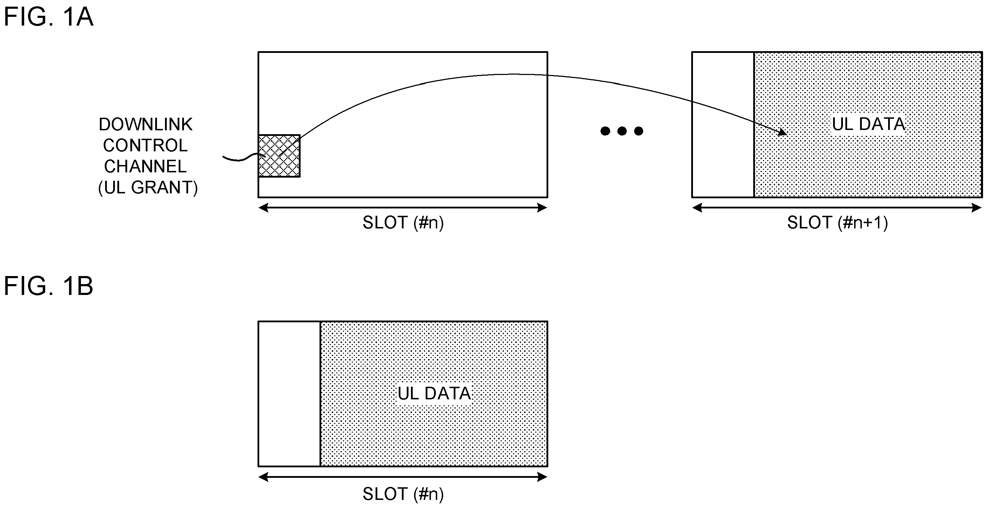

Here, UL grant-based transmission and UL grant-free transmission will be explained. FIG. 1A is a diagram to explain UL grant-based transmission, and FIG. 1B is a diagram to explain UL grant-free transmission.

In UL grant-base transmission, as shown in FIG. 1A, a radio base station (which may be referred to as, for example, a "base station (BS)," a "transmission/reception point (TRP)," an "eNode B (eNB)," a "gNB," etc.) transmits a downlink control channel (UL grant) that indicates allocation of UL data (PUSCH (Physical Uplink Shared CHannel)), and a UE transmits the UL data based on this UL grant.

Meanwhile, in UL grant-free transmission, as shown in FIG. 1B, a UE transmits UL data without receiving UL grants, which are provided for scheduling data.

Also, regarding UL grant-free transmission, studies are underway to repeat transmitting UL data. In repeated transmission of UL data, it is predictable that a UE repeats transmitting UL data a certain number of times (for example, K times) in transport block (TB) units. For example, the UE keeps transmitting TBs in response to UL data until downlink control information (UL grant) to command retransmission of UL data is transmitted, or until the number of times transmission is repeated reaches the above certain number of times.

Now, for NR, research is underway to provide support for configuring/re-configuring, at least semi-statically, resource fields for allocating UL data that is transmitted in UL-grant free transmission. Studies are underway to include at least physical, time and/or frequency domain resources in resource configuration.

For example, studies are in progress to configure resources for use in UL grant-free transmission, by higher layer signaling, as in UL semi-persistent scheduling (SPS), which is used in existing LTE (for example, LTE Rel. 8-13).

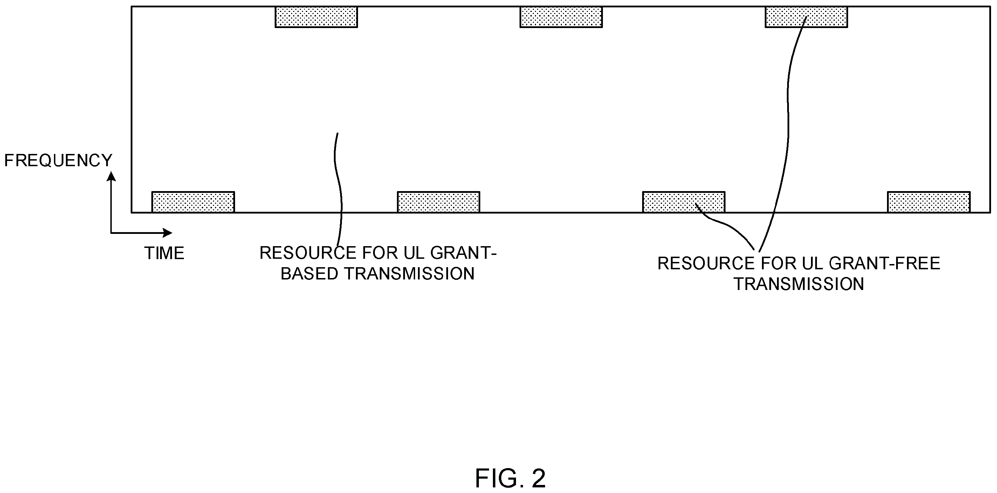

FIG. 2 is a diagram to show example of resources for use in UL grant-free transmission. As shown in FIG. 2, inter-TTI frequency hopping, intra-TTI frequency hopping and the like may be applied to frequency resources for use in UL grant-free transmission. Also, time resources for use in UL grant-free transmission may be configured contiguously in time, or may be configured non-contiguously (intermittently) in time. Note that, resources other than those used in UL grant-free transmission may be used in UL grant-based transmission.

However, there is a problem, when UL grant-free transmission is run based completely on semi-static configurations, that flexible control is not possible. In this case, there may be a decline in communication throughput, spectral efficiency, and so forth.

So, the present inventors have come up with a method for controlling UL grant-free transmission in a flexible way, and arrived at the present invention.

Now, embodiments of the present invention will be described in detail below with reference to the accompanying drawings. Note that the radio communication methods according to the herein-contained embodiments may be used individually or may be used in combination.

Note that, in the following embodiments, the prefix "NR-," which modifies signals and channels, may be omitted.

Furthermore, parameters used in UL grant-free transmission (which may be referred to as "radio parameters," "configuration information," etc.) may be referred to as "UL grant-free transmission parameters." Note that, the term "parameter" as used herein may mean a "parameter set," which is a set of one or more parameters.

### (Radio Communication Method)

### <Higher Layer Signaling for Reporting Parameters>

According to one embodiment of the present invention, parameters for UL grant-free transmission are semi-statically configured in a UE by way of higher layer signaling (for example, RRC signaling). The UE can implement UL grant-free transmission based on that configuration information.

The UL grant-free transmission parameters may include at least one of time and/or frequency resources, the modulation and coding scheme (MCS (which may include the redundancy version (RV)), reference signal parameters, the number of times to repeat UL grant free transmission (K), RV cycling (changing), parameters related to power ramping, random backoff, MCS adjustment in each repetition, etc.

Here, the time and/or frequency resources may be indicated by indices corresponding to time and/or frequency resources (for example, physical resource block (PRB) indices, cell indices, slot indices, subframe indices, symbol indices, and the like), the cycle of resources in the time and/or frequency direction, and so forth.

Note that some of the parameters (for example, parameters related to power ramping, RV cycling (changing), MCS adjustment, etc.) may be configured within a given number of repeated transmissions, or may be configured between repeated transmissions. For example, power ramping may be used within repeated transmissions, or the same transmission power may be used within repeated transmissions and power ramping may be applied between repeated transmissions.

Also, higher layer signaling to configure UL grant-free transmission parameters may be UE-common signaling or UE-specific signaling.

### <Parameter-Reporting L1 Signaling>

UL grant-free transmission parameters may be dynamically reported to the UE by physical layer (L1 (Layer 1) signaling (for example PDCCH). L1 signaling for reporting UL grant-free transmission parameters may be referred to as "parameter-reporting L1 signaling."

Assuming that parameters are reported via parameter-reporting L1 signaling, even if these parameters are configured via higher layer signaling, the UE controls UL grant-free transmission based on the values of the parameter reported by this L1 signaling.

Here, the parameters that are reported by this L1 signaling might include parameters that, for example, override, update, adjust and modify radio parameters that are configured by higher layer signaling. Note that expressions such as "override" are examples, and it is obvious that they may be replaced with words synonymous with these expressions.

The parameters that are reported by parameter-reporting L1 signaling may include a subset of the parameters configured by higher layer signaling, or may be a different set of parameters from the parameters configured by higher layer signaling (for example, parameters that have not been configured by higher layer signaling may be reported via L1 signaling).

In addition, the parameters to be reported via parameter-reporting L1 signaling are by no means limited to UL grant-free transmission parameters for the same cell (the same carrier), and may be signaling that, for example, overrides, adjust and modifies UL grant-free transmission parameters for another cell (another carrier). Note that which cell's (carrier's) UL grant-free transmission parameters are to be overridden, adjusted and modified may be configured in advance in the UE by higher layer signaling, or may be specified by the carrier indicator contained in this parameter-reporting L1 signaling. Whether or not this carrier indicator is included in parameter-reporting L1 signaling may be configured separately by higher layer signaling. By this means, the payload of L1 signaling can be controlled properly.

### <L1 Signaling for Activation>

Assuming that there are a number of parameter sets configured by higher layer signaling, the UE may activate a parameter set to use in UL grant-free transmission by L1 signaling (words such as "enable" may be used here). L1 signaling for activating parameters (parameter set) for use in UL grant-free transmission may be referred to as "activation L1 signaling." Note that a given parameter set and a command for activating this parameter set may be included in activation L1 signaling.

Also, activation L1 signaling may activate UL grant-free transmission parameters for the same cell (the same carrier), or activate UL grant-free transmission parameters for another cell (different carrier).

### < Control based on L1 Signaling related to UL Grant-Free Transmission Parameters>

L1 signaling for reporting parameters and L1 signaling for activation may be referred to as "L1 signaling related to UL grant-free transmission parameters." Now, control based on L1 signaling related to UL grant-free transmission parameters will be described below.

L1 signaling related to UL grant-free transmission parameter may include cyclic redundancy check (CRC) bits that are masked (scrambled) by using certain indicators (for example, network temporary identifiers (RNTIs)). According to this design, the UE can properly identify L1 signaling related to UL grant-free transmission parameters.

Note that, between parameter-reporting L1 signaling and activation L1 signaling, CRC masking may be done using the same indicators, or CRC masking may be done using different indicators. The above indicators applied to parameter-reporting L1 signaling and/or activation L1 signaling may be configured by, for example, higher layer signaling.

L1 signaling related to UL grant-free transmission parameters may be transmitted with higher layer signaling related to UL grant-free transmission parameters at the same time, or may be transmitted at a different timing. For example, this L1 signaling may be included in scheduling information (UL grant) for receiving the higher layer signaling, or may be reported separately after RRC configuration is completed.

If the UE successfully receives (decodes) and/or activates a parameter by way of L1 signaling, the UE may transmit a delivery confirmation signal (acknowledgment) that indicates receipt of the report/activation of this parameter, to the base station. This delivery confirmation signal may be transmitted by way of L1 signaling (for example, as an HARQ-ACK (Acknowledgment), an ACK/NACK, etc.), or may be transmitted by way of L2 signaling (according to the present invention which is defined by the claims this confirmation is transmitted only as a certain MAC CE (Medium Access Control Control Element)).

It may be assumed that parameter activation reported by L1 signaling and/or parameter by L1 signaling are valid for a certain period (for example, one or more slots, one or more subframes, etc.). That is, once the UE receives L1 signaling related to UL grant-free transmission parameters, the UE may perform UL grant-free transmission based on this L1 signaling (for example, by overriding parameters based on this L1 signaling) for a certain period.

This certain period may be given in this L1 signaling, may be separately reported to the UE by higher layer signaling (such as RRC signaling), or may be set forth in the specification in advance.

Note that, when the UE receives L1 signaling related to UL grant-free transmission parameters, the UE may start a timer to count the above certain period. Information about this timer (for example, information as to whether to start the timer, information about the condition for starting the timer, etc.) may be included in the L1 signaling or may be separately reported to the UE by higher layer signaling (such as RRC signaling), or may be set forth in the specification in advance.

Also, this certain period may be defined by the number of symbols, where each symbol has a symbol length that is determined based on the subcarrier spacing in at least one of UL grant-free transmission, L1 signaling, and synchronization signals, or the certain period may be defined by the number of slots, where each slot is constituted by a certain number of symbols (for example, 7 or 14 symbols), may be defined by the number of subframes, where each subframe is defined to be 1 ms, may be defined by the number of radio frames, where each radio frame is constituted by a bundle of multiple subframes (for example, 10 subframes), or may be defined by combining two or more of these.

While the timer is running, the UE performs UL grant-free transmission based on L1 signaling, and, after the timer expires, the UE may perform UL grant-free transmission based on the configurations used before the L1 signaling was received. Note that, when the timer is expired, the UE may deactivate UL grant-free transmission altogether (for example, all UL grant-free transmissions). For example, when the timer is expired, the UE may deactivate both the resources for UL grant-free transmission reported by L1 signaling and the resources for UL grant-free transmission configured by higher layer signaling.

Note that, if the UE has no UL data to transmit (for example, the buffer for transmission is empty), the UE does not have to perform UL grant-free transmission (the UE may skip transmission) in resources configured for UL grant-free transmission.

### <L1 Signaling for Deactivation>

At the UE, parameters that are reported by L1 signaling and/or activation of parameters by L1 signaling may be deactivated by different L1 signaling (words such as "disabled" may be used here). L1 signaling for deactivating parameter sets for use in UL grant-free transmission may be referred to as "deactivation L1 signaling."

The UE may deactivate resources for UL grant-free transmission reported by L1 signaling related to UL grant-free transmission parameters by deactivation L1 signaling. In this case, the UL grant-free transmission resource configured by the higher layer signaling may be used on an as-is basis (that is, UL grant-free transmission may be performed on the resource).

Also, the UE may deactivate UL grant-free transmission altogether (for example, all UL grant-free transmissions) by deactivation L1 signaling. For example, when deactivation L1 signaling is reported, the UE may deactivate both resources for UL grant-free transmission that are reported by L1 signaling related to UL grant-free transmission parameters, and resources for UL grant-free transmission that are configured by higher layer signaling.

Also, deactivation L1 signaling may deactivate UL grant-free transmission parameters for the same cell (the same carrier), or deactivate UL grant-free transmission parameters for another cell (different carrier).

Note that, if multiple parameter sets are already activated, information that specifies and deactivates one of these may be reported by way of deactivation L1 signaling.

Deactivation L1 signaling may include CRC bits that are masked (scrambled) by using certain indicators (for example, RNTIs). According to this design, the UE can properly identify deactivation L1 signaling.

Note that, between deactivation L1 signaling and L1 signaling related to UL grant-free transmission parameters, CRC masking may be done using the same indicators, or CRC masking may be done using different indicators. The above indicators applied to deactivation L1 signaling may be configured by, for example, higher layer signaling.

For example, deactivation L1 signaling may be designed in the same format (for example, the same size) as that of L1 signaling related to UL grant-free transmission parameters. In this case, these L1 signalings may be distinguished by a certain field (bits) contained in L1 signaling, or may be distinguished by the indicator used in CRC masking, which has been-mentioned earlier.

If the UE successfully deactivates a parameter by way of L1 signaling, the UE may transmit a delivery acknowledgment signal that indicates receipt of this parameter's deactivation, to the base station. This delivery acknowledgment signal may be transmitted by way of L1 signaling (for example, as an HARQ-ACK), or L2 signaling (for example, certain MAC CE).

### <Embodiment>

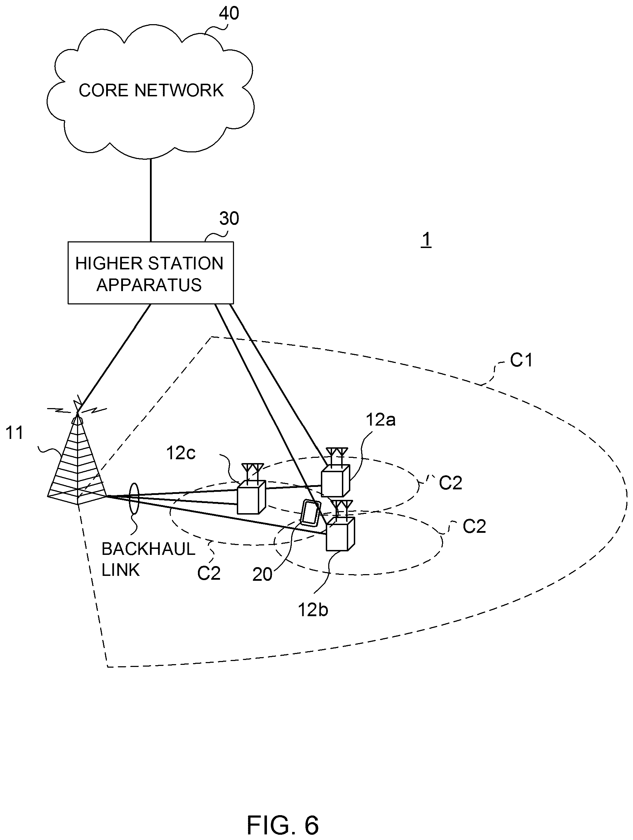

FIG. 6 is a diagram to show another example of UL grant-free transmission parameter control according to one embodiment of the present invention. In this example, a parameter set 1 is configured in a UE, as UL grant-free transmission parameters, by higher layer signaling (step S301). The UE can perform UL grant-free transmission based on parameter set 1.

A parameter set 2 is reported to the UE as UL grant-free transmission parameters by L1 signaling (step S302). In step S302 and afterwards, the UE performs UL grant-free transmission based on parameter set 2. If parameters overlap between parameter set 2 and parameter set 1, the UE uses parameter set 2 preferentially.

When L1 layer signaling to deactivate parameter set 2 is received, or when a certain period passes (a certain timer expires) after the receipt in step S302, the UE deactivates parameter set 2 (step S303). In step S303 and afterwards, the UE performs UL grant-free transmission based on parameter set 1 that was originally configured.

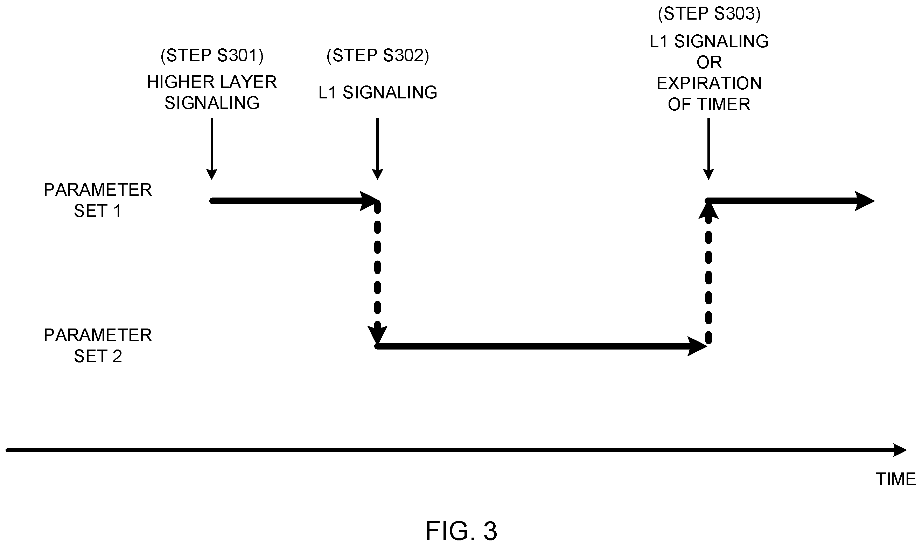

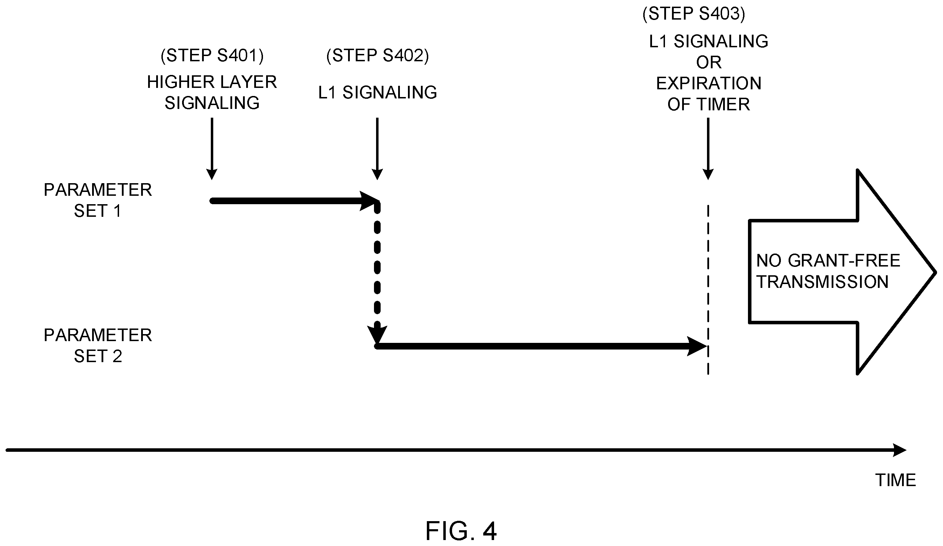

FIG. 4 is a diagram to show another example of UL grant-free transmission parameter control according to one embodiment of the present invention. In this example, steps S401 and S402 may be the same as steps S301 and S302 described in FIG. 3, respectively.

The UE deactivates all the UL grant-free transmissions when L1 layer signaling to deactivate UL grant-free transmission altogether is received, or when a certain period passes (when a certain timer expires) after the receipt in step S402 (step S403). In step S403 and afterwards, the UE does not perform UL grant-free transmission unless UL grant-free transmission parameters are reported again by higher layer signaling or physical layer signaling.

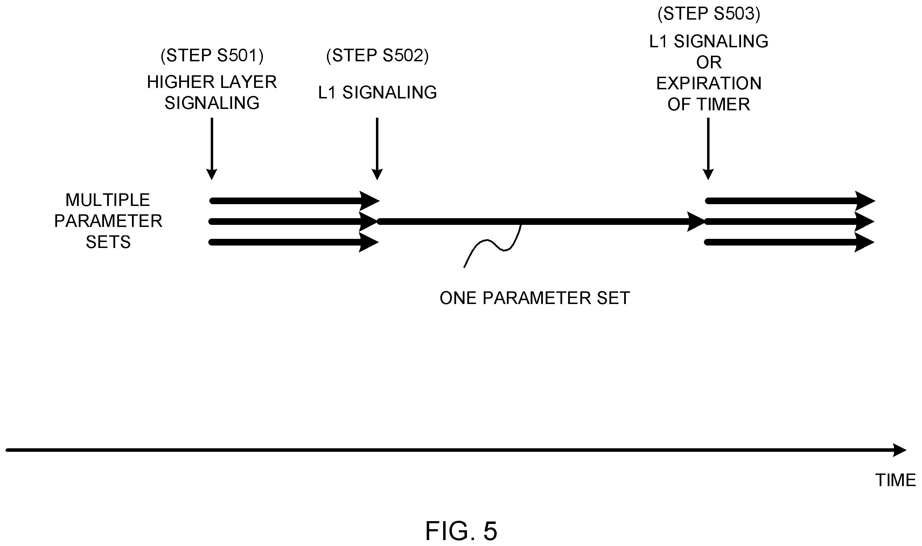

FIG. 5 is a diagram to show yet another example of control of UL grant-free transmission parameters according to one embodiment of the present invention. In this example, multiple parameter sets (for example, three parameter sets) are configured in the UE, by higher layer signaling, as UL grant-free transmission parameters (step S501).

In step S501 and afterwards, the UE can perform UL grant-free transmission based on at least one of these multiple parameter sets. For example, when these multiple parameter sets specify different transmission resources, the UE may perform UL grant-free transmission using one or more of these different transmission resources, or perform UL grant-free transmission by appropriately switching between these different transmission resources.

The UE activates one parameter set, by L1 signaling, as UL grant-free transmission parameters (step S502). In step S502 and afterwards, the UE performs UL grant-free transmission based on the activated parameter set.

If L1 layer signaling to deactivate the activated parameter set is received, or when a certain period passes (when a certain timer expires) after the receipt in step S502, the UE resumes the control to perform UL grant-free transmission based on at least one of multiple parameter sets (step S503). In step S503 and afterwards, the UE performs UL grant-free transmission based on at least one of a number of parameter sets that were originally configured.

According to one embodiment of the present invention described above, it is possible to control UL grant-free transmission in a flexible way.

### (Radio Communication System)

Now, the structure of a radio communication system according to one embodiment of the present invention will be described below. In this radio communication system, communication is performed using one of the radio communication methods according to the herein-contained embodiments of the present invention, or a combination of these.

FIG. 6 is a diagram to show an exemplary schematic structure of a radio communication system according to one embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "FRA (Future Radio Access)," "New-RAT (Radio Access Technology)" and so on, or may be seen as a system to implement these.

The radio communication system 1 includes a radio base station 11 that forms a macro cell C1, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement and number of cells and user terminals 20 are not limited to those illustrated in the drawing.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

Furthermore, the user terminals 20 can communicate by using time division duplexing (TDD) and/or frequency division duplexing (FDD), in each cell. Furthermore, in each cell (carrier), a single numerology may be used, or a plurality of different numerologies may be used.

The radio base station 11 and a radio base station 12 (or two radio base stations 12) may be connected with each other by cables (for example, by optical fiber, which is in compliance with the CPRI (Common Public Radio Interface), the X2 interface and so on), or by radio.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that, uplink and downlink radio access schemes are not limited to these combinations, and other radio access schemes may be used.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information, SIBs (System Information Blocks) and so on are communicated in the PDSCH. Also, the MIB (Master Information Blocks) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), which includes PDSCH and/or PUSCH scheduling information, is communicated by the PDCCH.

Note that scheduling information may be reported in DCI. For example, DCI to schedule receipt of DL data may be referred to as a "DL assignment," and DCI to schedule UL data transmission may also be referred to as a "UL grant."

The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel), a random access channel (PRACH (Physical Random Access CHannel)) and so on are used as uplink channels. User data, higher layer control information and so on are communicated by the PUSCH. Also, in the PUCCH, downlink radio quality information (CQI (Channel Quality Indicator)), delivery acknowledgment information, scheduling requests (SRs) and so on are communicated. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (SRSs (Sounding Reference Signals)), demodulation reference signals (DMRSs) and so on are communicated as uplink reference signals. Note that the DMRSs may be referred to as "user terminal-specific reference signals (UE-specific reference signals)." Also, the reference signals to be communicated are by no means limited to these.

### (Radio Base Station)

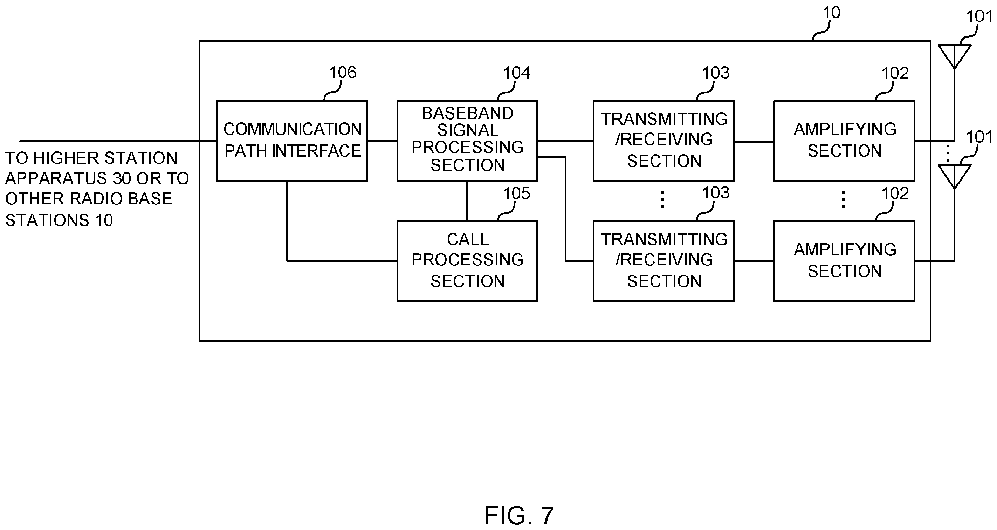

FIG. 7 is a diagram to show an exemplary overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a certain interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

The transmitting/receiving sections 103 receive data from a user terminal 20, which is transmitted via UL grant-free transmission, in which UL data is transmitted without UL transmission commands (UL grants) from the radio base station 10. After certain physical layer signaling is transmitted, the transmitting/receiving sections 103 may receive, from the user terminal 20, a delivery acknowledgment signal that indicating that the physical layer signaling has been received and/or has not been received.

In addition, the transmitting/receiving sections 103 may transmit higher layer signaling (for example, RRC signaling) for configuring UL grant-free transmission parameters, to the user terminal 20. In addition, the transmitting/receiving sections 103 may transmit at least one of L1 signaling for reporting parameters, L1 signaling for activation and L1 signaling for deactivation, to the user terminal 20.

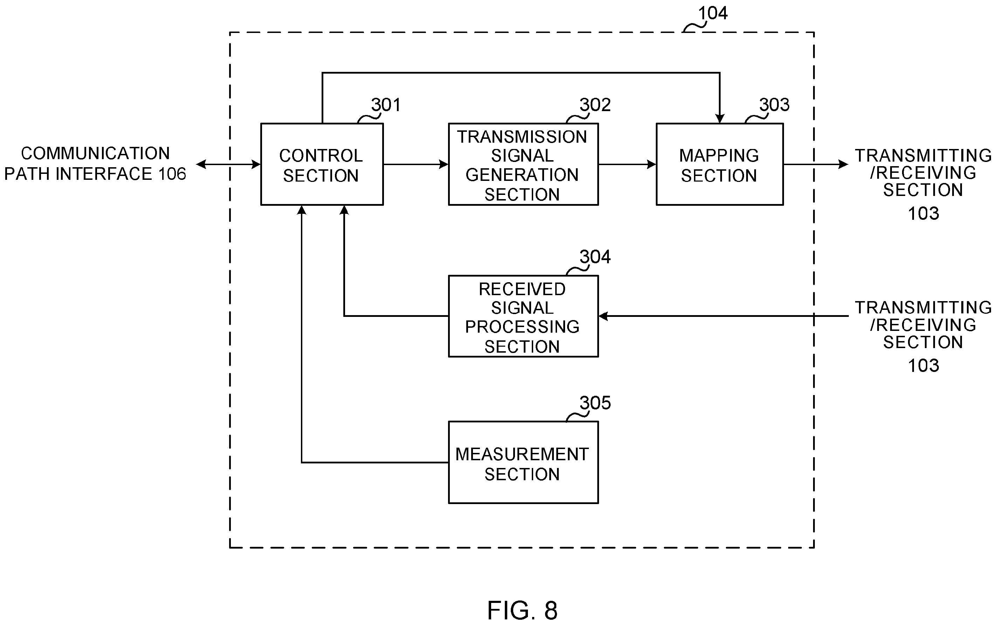

FIG. 8 is a diagram to show an exemplary functional structure of a radio base station according to one embodiment of the present invention. Note that, although this example primarily shows functional blocks that pertain to characteristic parts of the present embodiment, the radio base station 10 has other functional blocks that are necessary for radio communication as well.

The baseband signal processing section 104 has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301 controls, for example, generation of signals in the transmission signal generation section 302, allocation of signals in the mapping section 303, and so on. Furthermore, the control section 301 controls signal receiving processes in the received signal processing section 304, measurements of signals in the measurement section 305, and so on.

The control section 301 controls the scheduling (for example, resource allocation) of system information, downlink data signals (for example, signals transmitted in the PDSCH) and downlink control signals (for example, signals transmitted in the PDCCH and/or the EPDCCH, such as delivery acknowledgment information). Also, the control section 301 controls the generation of downlink control signals, downlink data signals and so on, based on the results of deciding whether or not retransmission control is necessary for uplink data signals, and so on. Also, the control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.) and so on.

The control section 301 also controls the scheduling of uplink data signals (for example, signals transmitted in the PUSCH), uplink control signals (for example, signals transmitted in the PUCCH and/or the PUSCH, such as delivery acknowledgment information), random access preambles (for example, signals transmitted in the PRACH), and uplink reference signals.

The control section 301 controls the transmission of physical layer (L1) signaling (at least one of L1 signaling for reporting parameters, L1 signaling for activation and L1 signaling for deactivation), so as to allow the user terminal 20 to identify (specify) the configurations of UL grant-free transmission.

Also, by means of the above physical layer signaling, the control section 301 may control based on which parameters UL grant-free transmission is to be performed, control whether UL grant-free transmission is performed or not, and so on.

The control section 301 may control the transmission of above physical layer signaling so as to allow the user terminal 20 to override and/or activate the parameters for UL grant-free transmission configured by higher layer signaling (for example, RRC signaling).

The control section 301 may control the transmission of certain physical layer signaling (for example, physical layer signaling apart from the above physical layer signaling for overriding and/or activation) so as to allow the user terminal 20 to deactivate at least one of the above-described overriding, activation and UL grant-free transmission.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink data allocation information, and/or UL grants, which report uplink data allocation information, based on commands from the control section 301. DL assignments and UL grants are both DCI, in compliance with DCI format. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to certain radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). For the received signal processing section 304, a signal processor, a signal processing circuit or signal processing apparatus that can be described based on general understanding of the technical field to which the present invention pertains can be used.

The received signal processing section 304 outputs the decoded information acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), etc.), SNR (Signal to Noise Ratio), the signal strength (for example, RSSI (Received Signal Strength Indicator)), transmission path information (for example, CSI), and so on. The measurement results may be output to the control section 301.

### (User Terminal)

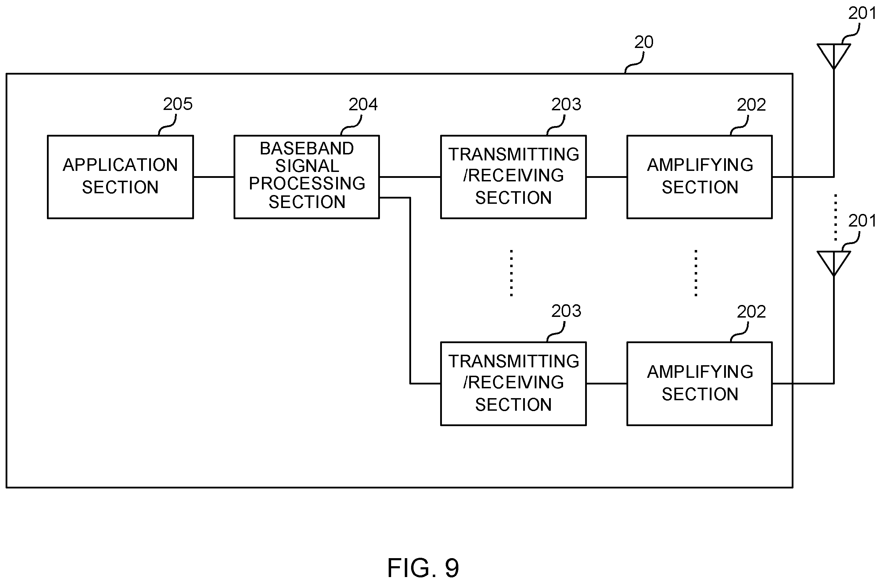

FIG. 9 is a diagram to show an exemplary overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer, and so on. In the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

The transmitting/receiving sections 203 transmit UL data without UL transmission commands (UL grants) from the radio base station 10. If certain physical layer signaling is received and/or not received, the transmitting/receiving sections 203 may transmit a delivery acknowledgment signal that indicates that the physical layer signaling has been received and/or has not been received.

In addition, the transmitting/receiving sections 203 receive higher layer signaling (for example, RRC signaling) for configuring UL grant-free transmission parameters. Also, the transmitting/receiving sections 203 may receive at least one of L1 signaling for reporting parameters, L1 signaling for activation and L1 signaling for deactivation, from the radio base station 10.

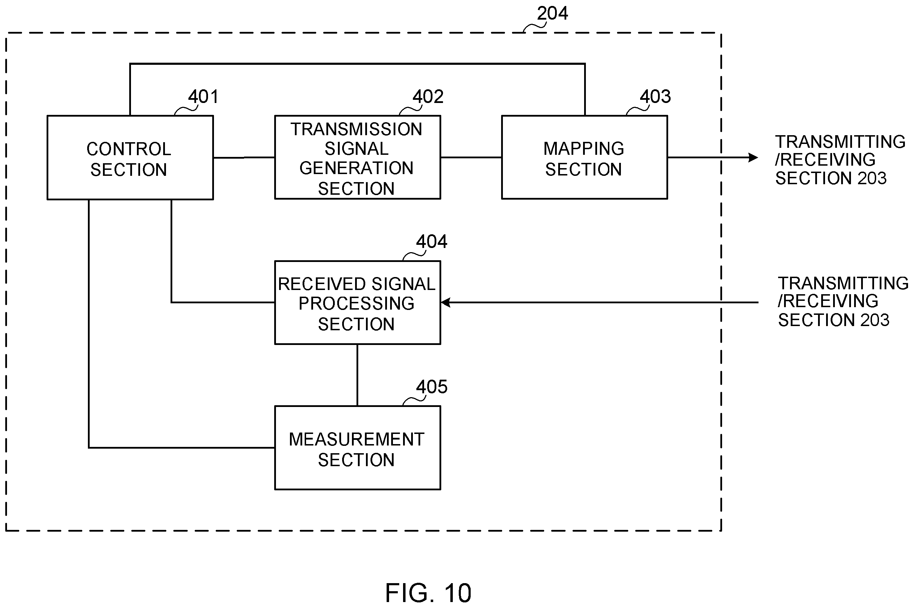

FIG. 10 is a diagram to show an exemplary functional structure of a user terminal according to one embodiment of the present invention. Note that, although this example primarily shows functional blocks that pertain to characteristic parts of the present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which the present invention pertains can be used.

The control section 401 controls, for example, generation of signals in the transmission signal generation section 402, allocation of signals in the mapping section 403, and so on. Furthermore, the control section 401 controls signal receiving processes in the received signal processing section 404, measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

The control section 401 identifies (specifies) the configuration of UL grant-free transmission based on physical layer (L1) signaling (for example, at least one of L1 signaling for reporting parameters, L1 signaling for activation and L1 signaling for deactivation) received from the received signal processing section 404.

In addition, the control section 401 controls UL grant-free transmission based on the determined configuration of UL grant-free transmission. Also, by means of the above physical layer signaling, the control section 301 may control based on which parameters UL grant-free transmission is to be performed, control whether UL grant-free transmission is performed or not, and so on.

The control section 401 may control UL grant-free transmission by overriding and/or activating the parameters for UL grant-free transmission configured by higher layer signaling (for example, RRC signaling) based on the above physical layer signaling. Note that the control section 401 may exert control so that the overriding and/or activation is allowed within a certain period after the above physical layer signaling is received, but is not allowed after this period expires.

The control section 401 may deactivate at least one of the above overriding, activation and UL grant-free transmission based on certain physical layer signaling (for example, physical layer signaling apart from the physical layer signaling for overriding and/or activation).

Also, when various pieces of information reported from the radio base station 10 are acquired from the received signal processing section 404, the control section 401 may update the parameters used in the control based on these pieces of information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit or signal generation apparatus that can be described based on general understanding of the technical field to which the present invention pertains.

For example, the transmission information generation section 402 generates uplink control signals such as delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and output the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

For example, the measurement section 405 may perform RRM measurements, CSI measurements, and so on, based on the received signals. The measurement section 405 may measure the received power (for example, RSRP), the received quality (for example, RSRQ, SINR, SNR, etc.), the signal strength (for example, RSSI), transmission path information (for example, CSI) and so on. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

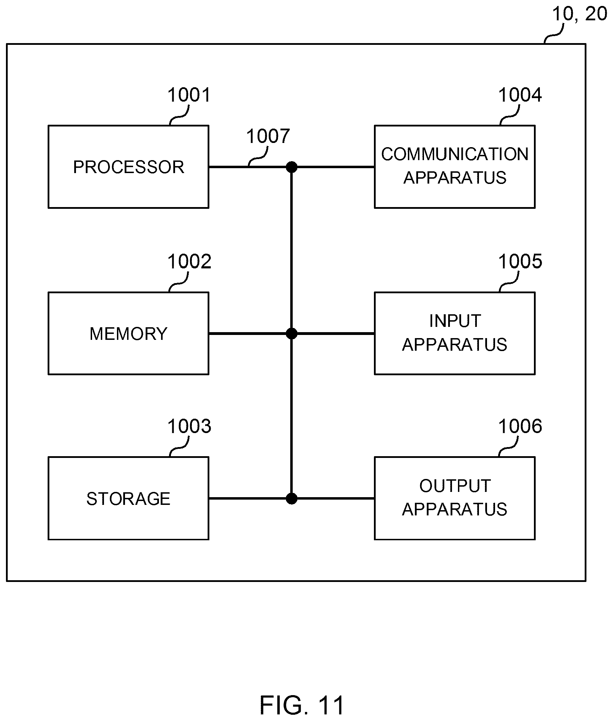

For example, the radio base station, user terminals and so on according to one embodiment of the present invention may function as a computer that executes the processes of the radio communication method of the present invention. FIG. 11 is a diagram to show an exemplary hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on one or more processors. Note that the processor 1001 may be implemented with one or more chips.

The functions of the radio base station 10 and the user terminal 20 are implemented by allowing hardware such as the processor 1001 and the memory 1002 to read certain software (programs), thereby allowing the processor 1001 to do calculations, the communication apparatus 1004 to communicate, and the memory 1002 and the storage 1003 to read and/or write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving apparatus) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or multiple slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of minislots. Each minislot may be comprised of one or more symbols in the time domain. Also, a minislot may be referred to as a "subslot."

A radio frame, a subframe, a slot, a minislot and a symbol all represent the time unit in signal communication. A radio frame, a subframe, a slot, a minislot and a symbol may be each called by other applicable names. For example, one subframe may be referred to as a "transmission time interval (TTI)," or a plurality of consecutive subframes may be referred to as a "TTI," or one slot or mini-slot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that, when a TTI is given, the period of time (for example, the number of symbols) in which transport blocks, code blocks and/or codewords are actually mapped may be shorter than the TTI.

Note that, when one slot or one minislot is referred to as a "TTI," one or more TTIs (that is, one or multiple slots or one or more minislots) may be the minimum time unit of scheduling. Also, the number of slots (the number of minislots) to constitute this minimum time unit of scheduling may be controlled.

A TTI having a time duration of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "partial TTI" (or a "fractional TTI"), a "shortened subframe," a "short subframe," a "mini-slot," a "sub-slot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one minislot, one subframe or one TTI in length. One TTI and one subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, one RE may be a radio resource field of one subcarrier and one symbol.

Note that the structures of radio frames, subframes, slots, minislots, symbols and so on described above are merely examples. For example, configurations pertaining to the number of subframes included in a radio frame, the number of slots included per subframe or radio frame, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to certain values, or may be represented using other applicable information. For example, a radio resource may be specified by a certain index.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, in a memory), or may be managed in a control table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of certain information (for example, reporting of information to the effect that "X holds") does not necessarily have to be sent explicitly, and can be sent in an implicit way (for example, by not reporting this piece of information, by reporting another piece of information, and so on).

Decisions may be made in values represented by one bit (0 or 1), may be made in Boolean values that represent true or false, or may be made by comparing numerical values (for example, comparison against a certain value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication systems and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be interpreted as "access."

As used herein, when two elements are connected, these elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical (both visible and invisible) regions.

In the present specification, the phrase "A and B are different" may mean "A and B are different from each other." The terms such as "leave" "coupled" and the like may be interpreted as well.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

## Claims

1. A terminal (20) arranged for being configured with parameter sets for uplink, UL, transmission without grant, the parameter sets being semi-statically configured by higher layer signaling, the terminal comprising:
a control section (401) configured to activate at least one of the parameter sets based on first downlink control information, DCI, transmitted on a Physical Downlink Control Channel, PDCCH; and
a transmitting section (203) configured to perform the UL transmission without grant using an active parameter set,
wherein when receiving the first DCI, the transmission section is configured to transmit a Medium Access Control Control Element, MAC CE, for confirmation,
wherein when the multiple parameter sets are activated, the control section (401) is configured to deactivate UL transmission without grant altogether based on second DCI.

2. The terminal (20) according to claim 1, wherein the second DCI has a same format as the first DCI.

3. The terminal (20) according to claim 1 or 2, wherein when a buffer is empty, the transmitting section (203) is configured not to perform the UL transmission.

4. The terminal (20) according to any one of claims 1 to 3, wherein the at least one of the parameter sets includes a redundancy version, RV, cycling.

5. A radio communication method for a terminal (20), comprising:
configuring parameter sets for uplink, UL, transmission without grant, semi-statically configured by higher layer signaling;
activating (S302; S402; S502; S503) at least one of the parameter sets based on first downlink control information, DCI, transmitted on a Physical Downlink Control Channel, PDCCH;
performing the UL transmission without grant using an active parameter set;
when receiving the first DCI, transmitting a Medium Access Control Control Element, MAC CE, for confirmation;
when the multiple parameter sets are activated, deactivating UL transmission without grant altogether based on second DCI.

6. A system (1) comprising a terminal (20) according to any of claims 1 to 4 and a base station (10).

## Patentansprüche

1. Endgerät (20), das dazu ausgelegt ist, mit Parametersätzen für eine Uplink-, UL-, Übertragung ohne Freigabe konfiguriert zu werden, wobei die Parametersätze durch Signalisierung einer höheren Schicht halbstatisch konfiguriert werden, wobei das Endgerät folgendes umfasst:
einen Steuerungsabschnitt (401), der dazu konfiguriert ist, mindestens einen der Parametersätze auf der Grundlage von ersten Downlink-Steuerungsinformationen, DCI, zu aktivieren, die auf einem physikalischen Downlink-Steuerungskanal, PDCCH, übertragen werden; und
einen Übertragungsbereich (203), der dazu konfiguriert ist, die UL-Übertragung ohne Freigabe unter Verwendung eines aktiven Parametersatzes durchzuführen,
wobei beim Empfangen der ersten DCI der Übertragungsabschnitt dazu konfiguriert ist, ein Mediumzugangssteuerungs-Steuerelement, MAC CE, zur Bestätigung zu übertragen,
wobei, wenn die mehreren Parametersätze aktiviert sind, der Steuerungsabschnitt (401) dazu konfiguriert ist, die UL-Übertragung auf der Grundlage der zweiten DCI ohne Freigabe vollständig zu deaktivieren.

2. Endgerät (20) nach Anspruch 1, wobei die zweiten DCI dasselbe Format wie die ersten DCI aufweisen.

3. Endgerät (20) nach Anspruch 1 oder 2, wobei, wenn ein Puffer leer ist, der Übertragungsbereich (203) dazu konfiguriert ist, die UL-Übertragung nicht durchzuführen.

4. Endgerät (20) nach einem der Ansprüche 1 bis 3, wobei der mindestens eine der Parametersätze ein periodisches Durchlaufen der Redundanzversion, RV, einschließt.

5. Funkkommunikationsverfahren für ein Endgerät (20), umfassend:
Konfigurieren von Parametersätzen für eine Uplink-, UL-, Übertragung ohne Freigabe, halbstatisch konfiguriert durch Signalisierung einer höheren Schicht;
Aktivieren (S302; S402; S502; S503) mindestens eines der Parametersätze auf der Grundlage von ersten Downlink-Steuerinformationen, DCI, die auf einem physikalischen Downlink-Steuerkanal, PDCCH, übertragen werden;
Durchführung der UL-Übertragung ohne Freigabe unter Verwendung eines aktiven Parametersatzes;
beim Empfangen der ersten DCI, Übertragen eines Mediumzugangssteuerungs-Steuerelements, MAC CE, zur Bestätigung;
wenn mehrere Parametersätze aktiviert sind, vollständiges Deaktivieren der UL-Übertragung auf der Grundlage der zweiten DCI ohne Freigabe.

6. System (1), umfassend ein Endgerät (20) nach einem der Ansprüche 1 bis 4 und eine Basisstation (10).

## Revendications

1. Terminal (20) disposé pour être configuré avec des ensembles de paramètres pour une transmission en liaison montante, UL, sans autorisation, les ensembles de paramètres étant configurés de façon semi-statique par une signalisation de couche supérieure, le terminal comprenant :
une section de commande (401) configurée pour activer au moins un des ensembles de paramètres sur la base de premières informations de commande de liaison descendante, DCI, transmises sur un canal de commande de liaison descendante physique, PDCCH ; et
une section de transmission (203) configurée pour effectuer la transmission UL sans autorisation en utilisant un ensemble de paramètres actifs,
dans lequel lors de la réception des premières DCI, la section de transmission est configurée pour transmettre un élément de commande de contrôle d'accès au support, MAC CE, pour confirmation,
dans lequel lorsque les ensembles de paramètres multiples sont activés, la section de commande (401) est configurée pour désactiver complètement une transmission UL sans autorisation sur la base de deuxièmes DCI.

2. Terminal (20) selon la revendication 1, dans lequel les deuxièmes DCI présentent le même format que les premières DCl.

3. Terminal (20) selon la revendication 1 ou la revendication 2, dans lequel quand un tampon est vide, la section de transmission (203) est configurée pour ne pas effectuer la transmission UL.

4. Terminal (20) selon l'une quelconque des revendications 1 à 3, dans lequel l'au moins un ensemble de paramètres parmi les ensembles de paramètres inclut un cyclage de version de redondance, RV.

5. Procédé de communication radio pour un terminal (20), comprenant :
une configuration des ensembles de paramètres pour une transmission de liaison montante, UL, sans autorisation, configurée de façon semi-statique par une signalisation de couche supérieure ;
une activation (S302 ; S402 ; S502 ; S503) d'au moins un ensemble de paramètres parmi les ensembles de paramètres sur la base de premières informations de commande de liaison descendante, DCI, transmises sur un canal de commande de liaison descendante physique, PDCCH ;
une mise en œuvre de la transmission UL sans autorisation en utilisant un ensemble de paramètres actifs ;
lors de la réception des premières DCI, une transmission d'un élément de commande de contrôle d'accès au support, MAC CE, pour confirmation ;
lorsque les ensembles de paramètres multiples sont activés, une désactivation complète d'une transmission UL sans autorisation sur la base de deuxièmes DCI.

6. Système (1) comprenant un terminal (20) selon l'une quelconque des revendications 1 à 4 et une station de base (10).
